# EUROPÄISCHE PATENTANMELDUNG

(11) **EP 4 122 746 A1**
(43) Veröffentlichungstag der Anmeldung: **25.01.2023**
(21) Anmeldenummer: 22181792.7
(22) Anmeldetag: 29.06.2022
(51) Int. Cl.: B60L 5/26, B60L 5/32, B60L 5/36

(54) **STROMABNEHMER FÜR EIN ELEKTRISCH ODER HYBRIDELEKTRISCH ANGETRIEBENES STRASSENFAHRZEUG**

(30) Priorität: 20.07.2021 DE 102021207709
(71) Anmelder: Siemens Mobility GmbH, 81739 München (DE)
(72) Erfinder: Blase, Bastian, 13156 Berlin (DE); Bühs, Florian, 10777 Berlin (DE)

(57) **Zusammenfassung**

Die Erfindung betrifft einen Stromabnehmer (2) für ein elektrisch oder hybridelektrisch angetriebenes Straßenfahrzeug (1) zur Einspeisung elektrischer Traktionsenergie aus einer zweipoligen, je Kontaktpol einen Fahrdraht (3) aufweisenden Oberleitungsanlage. Er umfasst ein gelenkiges Traggestänge (4), das fahrdrahtseitig Wippenanordnungen (7) mit Schleifleisten (8) trägt. Ein pneumatischer Hubantrieb (12) ist derart mit dem Traggestänge (4) gekoppelt, dass die Wippenanordnungen (7) bei Druckbeaufschlagung des Hubantriebs (12) aus einer unteren Ablageposition (h_{A}) in einer obere Kontaktposition (h_{K}) anhebbar und bei Druckentlastung eigengewichtgetrieben in die Ablageposition (h_{A}) absenkbar sind. Dabei ist der Hubantrieb (12) zur Druckbeaufschlagung über eine Zuluftleitung (18) mit einer Druckluftversorgung (15) und zur Druckentlastung über eine Abluftleitung (16) mit der Umgebung verbindbar. Erfindungsgemäß ist eine Ventilanordnung (20) mit einer in die Zuluftleitung (18) geschalteten Zuluftdrossel (21) und einer in die Abluftleitung (16) geschalteten Abluftdrossel (22) vorgesehen, wobei die Zuluftdrossel (21) einen durch ein Stellelement (23) verstellbaren Zuflussquerschnitt und die Abluftdrossel (22) einen durch ein Stellelement (23) verstellbaren Abflussquerschnitt aufweisen. Die Stellelemente (23) sind derart mit dem Hubantrieb (20) und/oder dem Traggestänge (4) wirkverbunden, dass der Zuflussquerschnitt beim Anheben der Wippenanordnungen (7) und der Abflussquerschnitt beim Absenken der Wippenanordnungen (7) in Abhängigkeit einer Vertikalposition (h) der Wippenanordnungen (7) einstellbar sind. Hierdurch ist sowohl ein verschleißarmes Andrahten als auch ein materialschonendes Abdrahten jeweils in kurzer Zeit möglich.

## Beschreibung

Die Erfindung betrifft einen Stromabnehmer für ein elektrisch oder hybridelektrisch angetriebenes Straßenfahrzeug nach dem Oberbegriff des Patentanspruches 1. Ferner betrifft die Erfindung ein Straßenfahrzeug mit einem solchen Stromabnehmer.

Stromabnehmer, insbesondere in Form von Pantographen, sind sowohl für Schienenfahrzeuge als auch für Straßenfahrzeuge zur Einspeisung von Traktionsenergie aus einer Oberleitungsanlage bekannt. Dazu muss ein Traggestänge des Stromabnehmers angehoben werden, um die von diesem getragenen Schleifleisten in einer oberen Kontaktposition mit Fahrdrähten der Oberleitungsanlage zu verbinden, man spricht hierbei vom Andrahten oder Anbügeln. Bei Bedarf muss das Traggestänge wieder abgesenkt werden, um den Kontakt der Schleifleisten von den Fahrdrähten zu lösen und sie in eine untere Ablageposition zu legen, wobei man vom Abdrahten oder Abbügeln spricht.

Bei einem Schienenfahrzeug passiert dies während eines Betriebstages nur ein oder wenige Male. Dabei unterliegt das Andrahten keinen erhöhten Zeitanforderungen. Beim Abdrahten wird zwischen normalem Abdrahten, welches langsam vollzogen werden kann, und notfallmäßigem schnellen Abdrahten unterschieden, wobei letzteres nur äußerst selten passiert und es dabei nicht zwingend gefordert ist, dass der Stromabnehmer davon keinerlei Schaden nimmt.

Straßenfahrzeuge unterliegen bei mehrspurigen Fahrbahnen keiner Spurbindung und können daher jederzeit seitlich ausscheren. Da dies auch jederzeit durch unvorhersehbare Ereignisse, wie Unfälle, Wildwechsel, menschliches Fehlverhalten, und dergleichen, ausgelöst sein kann, ist potenziell jeder Abdrahtvorgang wie ein Notabdrahten zu bewerten. Die Stromabnehmer sind daher daraufhin optimiert, möglichst zügig abzudrahten, ohne dabei Schaden zu nehmen. Gleichzeitig stellt jeder Abdrahtvorgang eine Unterbrechung der Energieübertragung dar, die nach einem Wiederausrichten des Straßenfahrzeugs in der elektrifizierten Fahrspur rasch beendet werden soll. Ein zügiges Andrahten ist daher gewünscht, so dass auch der Andrahtvorgang hochdynamisch eingestellt ist. Dies führt zu einem Verschleißverhalten durch Abplatzungen an und aus den Schleifleisten beim schnellen Andrahten und andererseits entstehen. Ein langsameres Andrahten führt jedoch zu einer Minderung der nutzbaren verbundenen Oberleitungsstrecke. An-und Abdrahtvorgänge kommen noch hinzu beim Einfahren in eine Fahrbahn mit elektrifiziertem Streckenabschnitt und beim Verlassen desselben sowie beim Befahren einer Fahrbahn, auf der ein elektrifizierter Streckenabschnitt beginnt oder endet.

Die Offenlegungsschrift DE 10 2018 214 873 A1 zeigt einen Stromabnehmer, der zur Montage auf einem Straßenfahrzeug vorgesehen ist, um elektrischer Energie aus einer zweipoligen Oberleitungsanlage mit einen Hin- und einen Rückleiter bildenden Fahrdrähten einzuspeisen. Er umfasst ein gelenkiges Traggestänge, welches fahrdrahtseitig Wippenanordnungen mit Schleifleisten trägt und fahrzeugseitig ein Basisgelenk zur Anlenkung an das Straßenfahrzeug aufweist. Ferner umfasst der Stromabnehmer einen pneumatischen Hubantrieb, der derart mit dem Traggestänge gekoppelt ist, dass die Wippenanordnungen bei Druckbeaufschlagung des Hubantriebs aus einer unteren Ablageposition in einer obere Kontaktposition anhebbar und bei Druckentlastung eigengewichtgetrieben in die Ablageposition absenkbar sind. Zur Druckbeaufschlagung ist der Hubantrieb mit einer Druckluftversorgung und zur Druckentlastung über eine Abluftleitung mit der Umgebung verbindbar. Das Absenken der Wippenanordnungen erfolgt in einer Schnellabsenkphase, in welcher die Wippenanordnungen zunächst aus der Kontaktposition in eine möglichst weit unten liegende Zwischenposition sinken. Dabei strömt Abluft getrieben durch das Eigengewicht der Wippenanordnungen aus dem Hubantrieb in einen Luftspeicher, bis sich ein Druckgleichgewicht eingestellt hat. Daran schließt sich dann eine Ablageabsenkphase an, in der die Wippenanordnungen aus der Zwischenposition weiter in die Ablageposition sinken, wobei Abluft aus dem Luftspeicher durch ein Drosselventil gedrosselt in die Umgebung strömt. Um den Aufprall auf eine in Ablageposition angeordnete Ablageeinrichtung zu dämpfen, sind mechanische Stoßdämpfer vorgesehen, um Beschädigungen am Stromabnehmer zu vermeiden.

Aus der älteren, noch nicht veröffentlichten Patentanmeldung 10 2021 203 046.7 ist ein Stromabnehmer bekannt, dessen Hubvorrichtung zum Aufrichten des Traggestells mit steuerbarer Hubgeschwindigkeit ausgebildet ist, wobei die Hubgeschwindigkeit der Schleifleisten beim Erreichen der Kontaktposition vermindert wird. Hierzu umfasst der Stromabnehmer eine Bestimmungseinrichtung zur Bestimmung einer Höhendifferenz zwischen Schleifleisten und Fahrdrähten, wobei die Hubvorrichtung die Hubgeschwindigkeit der Schleifleisten in Abhängigkeit der Höhendifferenz ansteuert. Die Bestimmungseinrichtung kann eine Sensoreinheit zur direkten Messung der Höhendifferenz aufweisen. Die Hubvorrichtung umfasst einen pneumatischen Hubantrieb, der durch einen Zuluftstrom aus einer Druckluftquelle gespeist wird, wobei die Hubgeschwindigkeit der Schleifleisten durch ein Pneumatikventil für den Zuluftstrom gesteuert wird.

Die Erfindung liegt die Aufgabe zugrunde, einen Stromabnehmer der eingangs genannte Art bereitzustellen, bei dem sowohl das Andrahten als auch das Abdrahten optimiert sind.

Die Aufgabe wird gelöst durch einen gattungsgemäßen Stromabnehmer mit den im kennzeichnenden Teil des Patentanspruches 1 angegebenen Merkmalen. Demnach ist ein solcher Stromabnehmer gekennzeichnet durch eine Ventilanordnung mit einer in die Zuluftleitung geschalteten Zuluftdrossel und einer in die Abluftleitung geschalteten Abluftdrossel, wobei die Zuluftdrossel einen durch ein Stellelement verstellbaren Zuflussquerschnitt und die Abluftdrossel einen durch ein Stellelement verstellbaren Abflussquerschnitt aufweisen. Dabei sind die Stellelemente derart mit dem Hubantrieb und/oder dem Traggestänge wirkverbunden, dass der Zuflussquerschnitt beim Anheben der Wippenanordnungen und der Abflussquerschnitt beim Absenken der Wippenanordnungen in Abhängigkeit einer Vertikalposition der Wippenanordnungen einstellbar.

Kern der Erfindung ist eine zentrale Ventilanordnung, durch die sowohl die Zuluft als auch die Abluft geleitet wird. Das linear verstellbare Stellelement ist über eine Wirkverbindung beispielsweise mit dem Balghebel des Hubantriebs gekoppelt. Durch diese mechanische lineare Kopplung ist die jeweilige Position des Stellelements in der Ventilanordnung eindeutig mit einer Vertikalposition des Stromabnehmers verknüpft. Die Position des Stellelements im Stellkanal wird benutzt, um den Volumenstrom der Zuluft und Abluft zu regulieren, indem sie Zu- und Abflussquerschnitt durch Zu- bzw. Abluftdrossel verändert. Die hermetisch getrennten Zu- und Abluftkammern gehören jeweils nur dem Zuluftkanal bzw. Abluftkanal an. Die Wirkverbindung kann aus zwei separaten Hebeln bestehen, welche je ein voneinander unabhängiges Stellelement für den Hub-und Absenkvorgang bewegen. Mit der Ventilanordnung ist sowohl ein sehr schnelles, aber möglichst materialschonendes Abdrahten und ein zügiges, aber verschleißarmes Andrahten ermöglicht und optimiert. Zudem ist die Lösung gegenüber anderen Ausführungsformen rein passiv, das heißt ohne die Bereitstellung von Fremdenergie, Sensorik oder Steuerungsalgorithmen ausgeführt. Dies stellt eine inhärente Robustheit gegenüber elektronischen Fehlermöglichkeiten dar und erfordert zudem keine eigene entsprechenden Sicherheitsklassifizierung für elektronische Baugruppen.

In einer vorteilhaften Ausführungsform des erfindungsgemäßen Stromabnehmers sind der Zuflussquerschnitt der Zuluftdrossel und der Abluftquerschnitt der Abluftdrossel jeweils gestuft oder stufenlos verstellbar.

In einer weiteren vorteilhaften Ausführungsform des erfindungsgemäßen Stromabnehmers ist der Zuflussquerschnitt der Zuluftdrossel beim Anheben der Wippenanordnungen und der Abflussquerschnitt der Abluftdrossel beim Absenken der Wippenanordnungen verminderbar. Die Verringerung der Durchflussquerschnitte muss weder linear zum zurückgelegten Weg des Stellelements noch im Zuluft- und Abluftpfad gleich gestaltet sein, sondern kann jeweils entsprechend individuell geformt werden, um ein optimales Hub- und Senkverhalten zu bieten.

In einer weiteren vorteilhaften Ausführungsform des erfindungsgemäßen Stromabnehmers erfolgen eine Verminderung des Zuflussquerschnitts erst kurz vor Erreichen der Kontaktposition und eine Verminderung des Abflussquerschnitts erst kurz vor Erreichen der Ablageposition.

In einer weiteren vorteilhaften Ausführungsform des erfindungsgemäßen Stromabnehmers umfasst die Ventilanordnung einen Gehäuseblock mit einem Stellkanal, in welchem das Stellelement längsverschiebbar angeordnet ist. Dabei ist das Stellelement derart geformt, dass es im Stellkanal eine Zuluftkammer und eine von dieser hermetisch getrennte Abluftkammer abteilt, welche durch eine Kanalwand des Stellkanals begrenzt sind. Die Zuluftdrossel ist durch einen den Gehäuseblock durchsetzenden und die Zuluftkammer aufweisenden Zuluftkanal gebildet, wobei der Zuflussquerschnitt durch einen vom Stellelement unbedeckten Anteil von in der Kanalwand im Bereich der Zuluftkammer liegenden Zuluftöffnungen gebildet ist. Die Abluftdrossel ist durch einen den Gehäuseblock durchsetzenden und die Abluftkammer aufweisenden Abluftkanal gebildet, wobei der Abflussquerschnitt durch einen vom Stellelement unbedeckten Anteil von in der Kanalwand im Bereich der Abluftkammer liegenden Abluftöffnungen gebildet ist.

In einer weiteren vorteilhaften Ausführungsform des erfindungsgemäßen Stromabnehmers weist der Zuluftkanal einen Zulufteintrittskanal auf, an welchem eingangsseitig die von der Druckluftversorgung herführende Zuluftleitung an den Gehäuseblock angeschlossen ist und welcher ausgangsseitig durch wenigstens eine der Zuluftöffnungen in die Zuluftkammer mündet. Der Zuluftkanal weist ferner einen Zuluftaustrittskanal auf, in welchen eingangsseitig die Zuluftkammer durch wenigstens eine der Zuluftöffnungen mündet und an welchen ausgangsseitig die zum Hubantrieb führende Zuluftleitung an den Gehäuseblock angeschlossen ist. Der Abluftkanal weist einen Ablufteintrittskanal auf, an welchem eingangsseitig die vom Hubantrieb herführende Abluftleitung an den Gehäuseblock angeschlossen ist und welcher ausgangsseitig über wenigstens eine der Abluftöffnungen in die Abluftkammer mündet. Der Abluftkanal weist ferner einen Abluftaustrittskanal auf, in welchen eingangsseitig die Abluftkammer durch wenigstens eine der Abluftöffnungen mündet und an welchen ausgangsseitig die in die Umgebung führende Abluftleitung an den Gehäuseblock angeschlossen ist.

In einer weiteren vorteilhaften Ausführungsform des erfindungsgemäßen Stromabnehmers sind die Zuluftöffnungen und/oder die Abluftöffnungen derart in der Kanalwand geformt und/oder verteilt, dass das Stellelement in Abhängigkeit der jeweiligen Vertikalposition der Wippenanordnungen Abluft bzw. Zuluft durch den jeweils unbedeckten Anteil der Abluftöffnungen bzw. Zuluftöffnungen mit einen Volumenstrom durchlässt, welcher einer für diese Vertikalposition vorgegebene Vertikalgeschwindigkeit der Wippenanordnungen entspricht.

Die Erfindung betrifft ferner ein Straßenfahrzeug mit einem elektrischen oder hybrid-elektrischen Antrieb und einem erfindungsgemäßen Stromabnehmer.

Weitere Eigenschaften und Vorteile der Erfindung ergeben sich aus nachfolgender Beschreibung eines Ausführungsbeispiels anhand der Zeichnungen, in deren
- FIG 1: ein erfindungsgemäßer Stromabnehmer,
- FIG 2: eine Ventilanordnung des Stromabnehmers aus FIG 1 im Längsschnitt,
- FIG 3-7: die Ventilanordnung aus FIG 2 zu verschiedenen Zeitpunkten während der Absenkphase und
- FIG 8-12: die Ventilanordnung aus FIG 2 zu verschiedenen Zeitpunkten während der Hubphase
schematisch veranschaulicht sind.

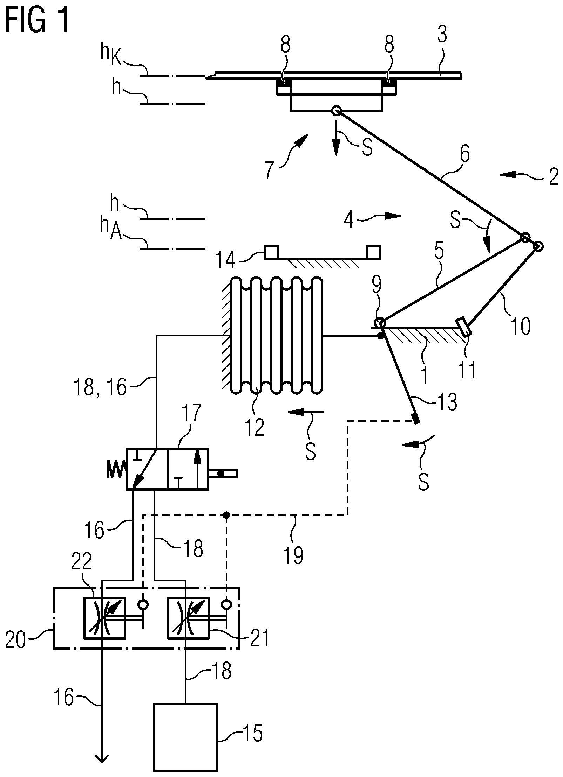

Von einem elektrisch oder hybridelektrisch angetriebenen Straßenfahrzeug 1, welches insbesondere ein Lastkraftwagen oder ein Bus sein kann, ist in FIG 1 lediglich ein Teil angedeutet, das einen erfindungsgemäßen Stromabnehmer 2 abstützt. Über den Stromabnehmer 2 kann zur Traktionsversorgung elektrische Energie aus einer Oberleitungsanlage in das Straßenfahrzeug 1 - sowohl im Stillstand als auch während der Fahrt - eingespeist werden. Die Oberleitungsanlage ist zweipolig ausgebildet und umfasst über einer Fahrbahn verlaufende, als Hin- und Rückleiter ausgebildete Fahrdrähte 3, von welchen in FIG 1 aufgrund gleicher Fahrdrahthöhe nur einer zu sehen ist. Der Stromabnehmer 2 ist als pantographenartiger Halbscherenstromabnehmer ausgebildet und umfasst ein gelenkiges Traggestänge 4 mit einem Unterarm 5 und zwei Oberarmen 6, die gelenkig miteinander verbunden sind. Jeder der beiden Oberarme 6 trägt fahrdrahtseitig eine Wippenanordnung 7 mit jeweils zwei parallel zueinander und quer zu einer Fahrzeuglängsachse verlaufende Schleifleisten 8. Zur Anlenkung des Stromabnehmers 2 an das Straßenfahrzeug 1 ist der Unterarm 5 fahrzeugseitig über ein Basisgelenk 9 mit dem Straßenfahrzeug 1 schwenkbar verbunden. An den fahrzeugseitigen Enden der Oberarme 6 sind je eine Zugstange 10 angelenkt, die über ein Kreuzlager 11 mit dem Straßenfahrzeug 1 gelenkig verbunden sind.

Mit dem Traggestänge 4 ist gemäß FIG 1 ein pneumatischer Hubantrieb 12 in Form eines Luftfederbalgs über Koppelmittel 13 so gekoppelt, dass die Wippenanordnungen 7 bei Druckbeaufschlagung des Hubantriebs 12 aus einer unteren Ablageposition h_{A}, in der die Wippenanordnungen 7 auf einer Ablageeinrichtung 14 aufliegen, in eine obere Kontaktposition h_{K}, in der die Schleifleisten 8 der Wippenanordnungen 7 die Fahrdrähte 3 kontaktieren, anhebbar ist. Die Druckbeaufschlagung wird durch eine Druckluftversorgung 15 bewerkstelligt, zu der - nicht näher dargestellt - ein Kompressor, ein Druckluftbehälter, ein Öl-/Wasserabscheider und eine Druckregeleinrichtung gehören können. Geeignete mechanische Koppelmittel 13, beispielsweise ein mit dem beweglichen Teil des Hubantriebs 12 verbundener Stößel und ein von diesem bewegter Balghebel 13, wandeln eine lineare Stellkraft des Hubantriebs 12 in ein Drehmoment des Unterarms 5 im Basisgelenk 9 um. In der Ablageposition h_{A} ist das Traggestänge 4 des abgebügelten Stromabnehmers 2 zusammengeklappt und liegt auf der Ablageeinrichtung 14 auf, so dass das Straßenfahrzeug 1 die für einen Betrieb außerhalb elektrifizierter Fahrstrecken einzuhaltende, zulässige Gesamtfahrzeughöhe nicht überschreitet und der Stromabnehmer 2 sich in einem elektrisch gesicherten Zustand befindet. Beim Anbügeln des Stromabnehmers 2 erzwingen die Zugstangen 10 ein Aufrichten der Oberarme 6, wenn der Unterarm 5 aufgerichtet wird. In der Kontaktposition h_{K} werden die Schleifleisten 8 der Wippenanordnungen 7 an je einen der Fahrdrähte 3 der Oberleitungsanlage gedrückt, so dass sowohl im Stand als auch während der Fahrt Energie aus der Oberleitungsanlage in das Straßenfahrzeug 1 übertragen werden kann.

Um die Wippenanordnungen 7 aus der Kontaktposition h_{K} in die Ablageposition h_{A} zu überführen, erfolgt eine Druckentlastung des Hubantriebs 12, so dass die Wippenanordnungen 7 durch ihr Eigengewicht getrieben sinken und das Traggestänge 4 zusammenklappt. Die Bewegungsrichtung der beim Absenken bewegten Stromabnehmerteile sind in FIG 1 durch Pfeile S gekennzeichnet. Ein solches Abbügeln des Stromabnehmers 2 ist nicht nur vor dem Ende der Fahrdrähte 3 oder dem Verlassen eines elektrifizierten Streckenabschnittes erforderlich, sondern auch vor einem gesicherten Wechsel von einem elektrifizierten auf einen nicht elektrifizierten Fahrstreifen, etwa für ein Überhol- oder Ausweichmanöver. Hierzu ist an den Hubantrieb 12 eine Abluftleitung 16 angeschlossen, über die Abluft aus dem unter Überdruck stehenden Hubantrieb 12 in die Umgebung abgelassen werden kann. Zwischen dem Hubantrieb 12 und der Druckluftversorgung 15 ist ein elektrisch betätigbares Zwei-Wege-Ventil 17 angeordnet, an dem auch eine von der Druckluftversorgung 15 kommende Zuluftleitung 18 angeschlossen ist. Im betätigten Zustand des Zwei-Wege-Ventils 17 besteht eine pneumatische Verbindung zwischen der Druckluftversorgung 15 und dem Hubantrieb 12, so dass der Stromabnehmer 2 angehoben oder im angebügelten Zustand eine Anpresskraft der Schleifleisten 8 an die Fahrdrähte 3 geregelt werden kann. Im in FIG 1 dargestellten, nicht betätigten Zustand gibt das Zwei-Wege-Ventil 17 eine pneumatische Verbindung zwischen Hubantrieb 12 und der Umgebung frei, während der Anschluss zur Druckluftversorgung 15 gesperrt ist. Je nach Schaltzustande des Zwei-Wege-Ventils 17 wird der zwischen Hubantrieb 12 und Zwei-Wege-Ventil 17 verlaufende Leitungsabschnitt als Abluftleitung 16 oder als Zuluftleitung 18 genutzt.

Gemäß FIG 1 führen die Abluftleitung 16 und die Zuluftleitung 18 aus dem Zwei-Wege-Ventil 17 weiter zu einer Ventilanordnung 20 mit einer in die Zuluftleitung 18 geschalteten Zuluftdrossel 21 und einer in die Abluftleitung 16 geschalteten Abluftdrossel 22. Sowohl die Zuluftdrossel 21 als auch die Abluftdrossel 22 weisen verstellbare Durchflussquerschnitte auf. Hierzu sind die Abluftdrossel 22 und die Zuluftdrossel 21 derart mit dem Hubantrieb 12 und/oder dem Traggestänge 4 wirkverbunden, dass der Zuflussquerschnitt der Zuluftdrossel 21 beim Anheben der Wippenanordnungen 7 und der Abflussquerschnitt der Abluftdrossel 22 beim Absenken der Wippenanordnungen 7 in Abhängigkeit einer Vertikalposition h der Wippenanordnungen 7 einstellbar sind. Die Wirkverbindung 19 kann durch Kolbenstangen gebildet sein, die direkt oder indirekt mit dem Balghebel 13 der Koppelmittel gekoppelt sind.

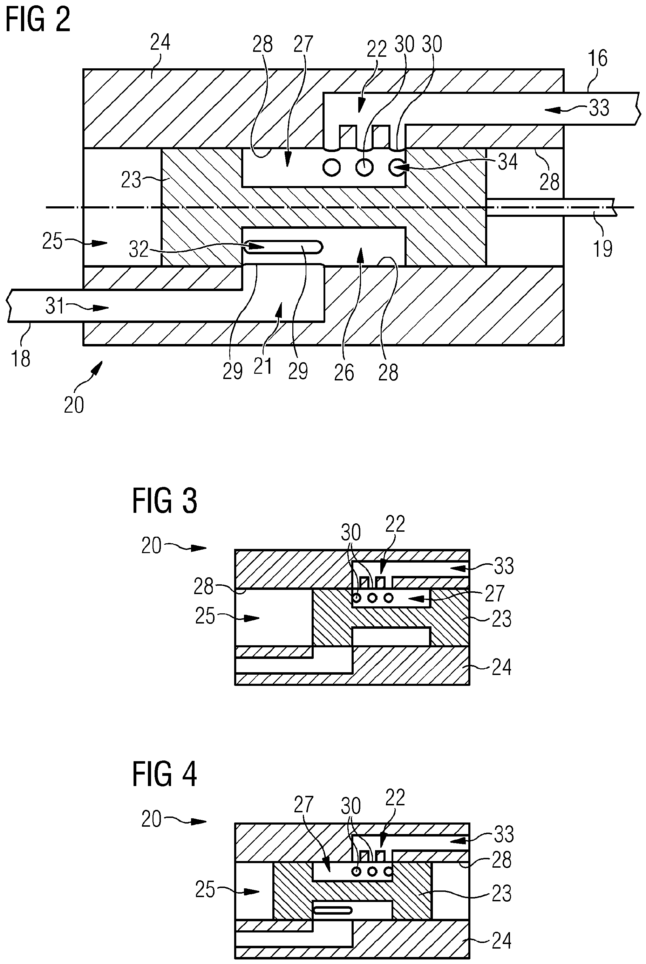

Gemäß FIG 2 umfasst die Ventilanordnung 20 einen Gehäuseblock 24, der am Straßenfahrzeug 1 oder an einem mit diesem verbundenen Grundrahmen des Stromabnehmers 2 befestigt ist. Der Gehäuseblock 24 weist einen beispielsweise zylindrischen Stellkanal 25, in welchem ein entsprechend zylindrisches Stellelement 23 längsverschiebbar angeordnet ist. Das Stellelement 23 ist beispielsweise durch zwei gegenüberliegende Ausfräsungen derart geformt, dass es im Stellkanal 25 eine Zuluftkammer 26 und eine von dieser hermetisch getrennte Abluftkammer 27 abteilt. Die Zuluftkammer 26 und die Abluftkammer 27 sind seitlich durch eine Kanalwand 28 des Stellkanals 25 begrenzt. Die Zuluftdrossel 21 ist durch einen den Gehäuseblock 24 durchsetzenden und die Zuluftkammer 26 aufweisenden Zuluftkanal gebildet, wobei deren Zuflussquerschnitt durch einen vom Stellelement 23 unbedeckten Anteil von in der Kanalwand 28 im Bereich der Zuluftkammer 26 liegenden Zuluftöffnungen 29 gebildet ist. Entsprechend ist die Abluftdrossel 2 durch einen den Gehäuseblock 24 durchsetzenden und die Abluftkammer 27 aufweisenden Abluftkanal gebildet, wobei deren Abflussquerschnitt durch einen vom Stellelement 23 unbedeckten Anteil von in der Kanalwand 28 im Bereich der Abluftkammer 27 liegenden Abluftöffnungen 30 gebildet ist. Das Stellelement 23 wird im Stellkanal 25 beispielsweise über eine Kolbenstange 19 als Wirkverbindung zum Balghebel 13 (FIG 1) und damit durch die Vertikalposition h der Wippenanordnungen 7 eingestellt.

Der Zuluftkanal weist einen Zulufteintrittskanal 31 und einen Zuluftaustrittskanal 32 auf. Eingangsseitig ist am Zulufteintrittskanal 31 die von der Druckluftversorgung 15 herführende Zuluftleitung 18 an den Gehäuseblock 24 angeschlossen. Ausgangsseitig mündet der Zulufteintrittskanal 31 durch wenigstens eine der Zuluftöffnungen 32 in die Zuluftkammer 26. In den in FIG 2 nicht dargestellten Zuluftaustrittskanal 32 mündet eingangsseitig die Zuluftkammer 26 durch wenigstens eine der Zuluftöffnungen 29. Ausgangsseitig ist an den Zuluftaustrittskanal 32 die zum Hubantrieb 12 führende Zuluftleitung 18 an den Gehäuseblock 24 angeschlossen.

Der Abluftkanal weist einen Ablufteintrittskanal 33 und einen Abluftaustrittskanal 34 auf. Am Ablufteintrittskanal 33 ist eingangsseitig die vom Hubantrieb 12 herführende Abluftleitung 16 an den Gehäuseblock 24 angeschlossen. Ausgangsseitig mündet der Ablufteintrittskanal 33 über eine der Abluftöffnungen 30 in die Abluftkammer 27. In den in FIG 2 nicht dargestellten Abluftaustrittskanal 34 mündet eingangsseitig die Abluftkammer 27 durch wenigstens eine der Abluftöffnungen 30. Ausgangsseitig ist an den Abluftaustrittskanal 34 die in die Umgebung führende Abluftleitung 16 an den Gehäuseblock 24 angeschlossen.

Im dargestellten Ausführungsbeispiel ist der Zuflussquerschnitt der Zuluftdrossel 21 stufenlos verstellbar, während der Abluftquerschnitt der Abluftdrossel 22 gestuft verstellbar ist. Je nach Bedarf kann die Verstellbarkeit der Durchflussquerschnitte auch umgekehrt oder beide in gleicher Weise erfolgen. Für die stufenlose Verstellbarkeit sind der Zulufteintrittskanal 31 und der Zuluftaustrittskanal 32 mit der Zuluftkammer 26 über jeweils eine, als Langlochausgebildete Zuluftöffnung 29 verbunden. Für eine gestufte Verstellbarkeit sind der Ablufteintrittskanal 33 und der Abluftaustrittskanal 34 mit der Abluftkammer 27 über mehrere, in Verstellrichtung hintereinander liegende Abluftöffnungen 30 verbunden. Die Zuluftöffnungen 29 und/oder die Abluftöffnungen 30 sind also derart in der Kanalwand 28 geformt und/oder verteilt, dass das Stellelement 23 in Abhängigkeit der jeweiligen Vertikalposition h der Wippenanordnungen 7 Abluft bzw. Zuluft durch den jeweils unbedeckten Anteil der Abluftöffnungen 30 bzw. Zuluftöffnungen 29 mit einen Volumenstrom durchlässt, welcher einer für diese Vertikalposition h vorgegebenen Vertikalgeschwindigkeit der Wippenanordnungen 7 entspricht.

Um einen sehr schnellen Andraht- und Abdrahtvorgang zu gewährleisten, sind der Zuflussquerschnitt der Zuluftdrossel 21 beim Anheben der Wippenanordnungen 7 sowie der Abflussquerschnitt der Abluftdrossel 22 beim Absenken der Wippenanordnungen 7 zunächst groß eingestellt und sind dann aber verminderbar. Die Verminderung des Zuflussquerschnitts erfolgt jedoch erst kurz vor Erreichen der Kontaktposition h_{K}, während die Verminderung des Abflussquerschnitts erst kurz vor Erreichen der Ablageposition h_{A} erfolgt. Hierdurch wird die Vertikalgeschwindigkeit der Wippenanordnungen 7 derart abgesenkt, dass möglichst materialschonende abgedrahtet und verschleißarm angedrahtet werden kann.

FIG 3 bis FIG 7 zeigen den Absenkvorgang an fünf aufeinander folgenden Zeitpunkten. Im angedrahtetem Zustand ist das Stellelement 23 gemäß FIG 3 in seine rechten Extremalposition gestellt. Zum Abdrahten schaltet das Zwei-Wege-Ventil 17 den Abluftweg vom Hubantrieb 12 auf den Ablufteintrittskanal 33 der Ventilanordnung 20. Aufgrund seiner Kopplung zum Balghebel 13 ist das Stellelement 23 so gegenüber den Abluftöffnungen 30 positioniert, dass der Abflussquerschnitt der Abluftdrossel 22 maximal ist, also keine Abluftöffnung 30 abgedeckt ist. Die Abluft strömt mit einem hohen Volumenstrom aus dem Hubantrieb 12 durch die Ventilanordnung 20 und entweicht in die Umgebung.

Durch den fallenden Stromabnehmer 2 wird der Balghebel 13 gemäß FIG 1 nach links verschoben, wodurch sich das Stellelement 23 verschiebt, bis die Abluftöffnungen 30 gemäß FIG 4 an den Rand der Abluftkammer 27 geraten. Hier ist die Schnellabsenkphase mit großem Abluftvolumenstrom beendet.

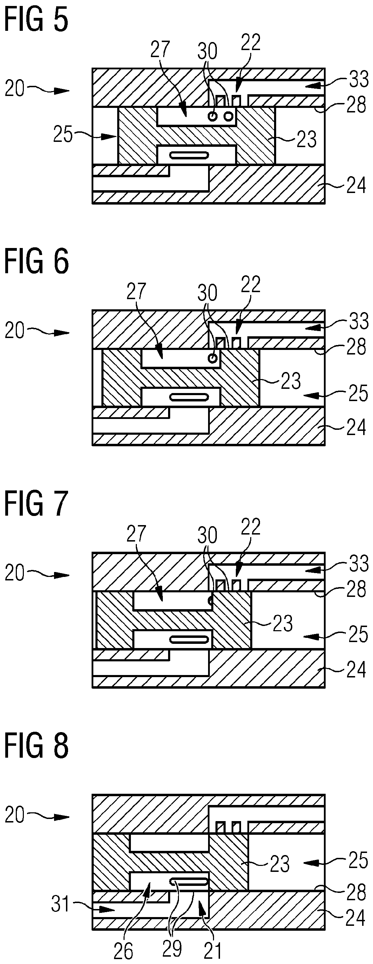

Gemäß FIG 5 bis FIG 7 wird nun in einer Ablageabsenkphase der Abflussquerschnitt mit zunehmendem Absenken des Stromabnehmers 2 vermindert, so dass die Abluft durch die Abluftdrossel 22 langsamer entweicht. Der Druck im Hubantrieb 12 steigt nun etwas, was den fallenden Stromabnehmer 2 abbremst. Gegen Ende des Absenkvorgangs ist das Stellelement 23 nahe seiner linken Extremalposition, in der die Restluft nur noch langsam entweicht, bis der Stromabnehmer sanft auf die Ablageeinrichtung 14 abgelegt ist.

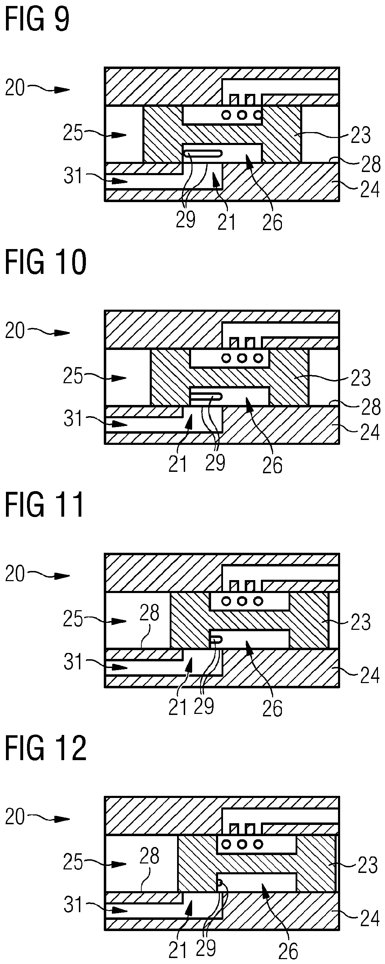

Diese Stellung des Stellelements 23 zeigt FIG 8, in der jederzeit ein Hubvorgang, wie in FIG 8 bis FIG 12 gezeigt, gestartet werden kann. Schaltet zu Beginn des Hubs das Zwei-Wege-Ventil 17 den Zuluftstrom von der Druckluftversorgung 15 auf den Zulufteintrittskanal 31 der Ventilanordnung 20, steht das Stellelement 23 aufgrund seiner Kopplung 19 mit dem Balghebel 13 in der linken Extremalposition, in welcher der Zuflussquerschnitt der Zuluftdrossel 21 gemäß FIG 8 maximal ist. Entsprechend hoch ist der Volumenstrom der Zuluft und der Druck im Hubantrieb 12 baut sich schnell auf, woraufhin sich der Balghebel 13 gemäß FIG 1 nach rechts bewegt und der Stromabnehmer 2 erhebt, bis die Zuluftöffnungen 29 gemäß FIG 9 gerade noch nicht durch das Stellelement 23 abgedeckt werden. Zu diesem Zeitpunkt ist die Schnellhubphase abgeschlossen und die Wippenanordnungen 7 befinden sich nahe ihrer Kontaktposition h_{K}.

Gemäß FIG 10 bis FIG 12 verdeckt das Stellelement 23 bei weiterem Anheben des Stromabnehmers 2 einen zunehmend größeren Anteil der Zuluftöffnungen 29. Der Volumenstrom der Zuluft sinkt dadurch und der Stromabnehmer 2 hebt sich immer langsamer an, bis zum Ende des Hubvorgangs gemäß FIG 12 nur noch wenig Zuluft durch den stark verringerten Zuflussquerschnitt der Zuluftdrossel 21 gelassen wird. Der Stromabnehmer 2 drahtet mit geringer Vertikalgeschwindigkeit verschleißarm an die Fahrdrähte 3 an.

## Patentansprüche

1. Stromabnehmer (2) für ein elektrisch oder hybridelektrisch angetriebenes Straßenfahrzeug (1) zur Einspeisung elektrischer Traktionsenergie aus einer zweipoligen, je Kontaktpol einen Fahrdraht (3) aufweisenden Oberleitungsanlage, umfassend
- ein gelenkiges Traggestänge (4), das fahrdrahtseitig Wippenanordnungen (7) mit Schleifleisten (8) trägt und fahrzeugseitig ein Basisgelenk (9) zur Abstützung auf dem Straßenfahr-zeug (1) aufweist, und
- einen pneumatischen Hubantrieb (12), der derart mit dem Traggestänge (4) gekoppelt ist, dass die Wippenanordnungen (7) bei Druckbeaufschlagung des Hubantriebs (12) aus einer unteren Ablageposition (h_{A}) in einer obere Kontaktposition (h_{K}) anhebbar und bei Druckentlastung eigengewichtgetrieben in die Ablageposition (h_{A}) absenkbar sind,
- wobei der Hubantrieb (12) zur Druckbeaufschlagung über eine Zuluftleitung (18) mit einer Druckluftversorgung (15) und zur Druckentlastung über eine Abluftleitung (16) mit der Umgebung verbindbar ist,
**gekennzeichnet**
- **durch** eine Ventilanordnung (20) mit einer in die Zuluftleitung (18) geschalteten Zuluftdrossel (21) und einer in die Abluftleitung (16) geschalteten Abluftdrossel (22),
- wobei die Zuluftdrossel (21) einen durch ein Stellelement (23) verstellbaren Zuflussquerschnitt und die Abluftdrossel (22) einen durch ein Stellelement (23) verstellbaren Abflussquerschnitt aufweisen,
- wobei die Stellelemente (23) derart mit dem Hubantrieb (20) und/oder dem Traggestänge (4) wirkverbunden sind, dass der Zuflussquerschnitt beim Anheben der Wippenanordnungen (7) und der Abflussquerschnitt beim Absenken der Wippenanordnungen (7) in Abhängigkeit einer Vertikalposition (h) der Wippenanordnungen (7) einstellbar sind.

2. Stromabnehmer (2) nach dem vorangehenden Anspruch,
- wobei der Zuflussquerschnitt der Zuluftdrossel (21) und der Abluftquerschnitt der Abluftdrossel (22) jeweils gestuft oder stufenlos verstellbar sind.

3. Stromabnehmer (2) nach einem der vorangehenden Ansprüche,
- wobei der Zuflussquerschnitt der Zuluftdrossel (21) beim Anheben der Wippenanordnungen (7) und der Abflussquerschnitt der Abluftdrossel (22) beim Absenken der Wippenanordnungen (7) verminderbar ist.

4. Stromabnehmer (2) nach Anspruch 3,
- wobei eine Verminderung des Zuflussquerschnitts erst kurz vor Erreichen der Kontaktposition (h_{K}) und eine Verminderung des Abflussquerschnitts erst kurz vor Erreichen der Ablageposition (h_{A}) erfolgen.

5. Stromabnehmer (2) nach einem der vorangehenden Ansprüche,
- wobei die Ventilanordnung (20) einen Gehäuseblock (24) mit einem Stellkanal (25) umfasst, in welchem das Stellelement (23) längsverschiebbar angeordnet ist,
- wobei das Stellelement (23) derart geformt ist, dass es im Stellkanal (25) eine Zuluftkammer (26) und eine von dieser hermetisch getrennte Abluftkammer (27) abteilt, welche durch eine Kanalwand (28) des Stellkanals (25) begrenzt sind,
- wobei die Zuluftdrossel (21) durch einen den Gehäuseblock (24) durchsetzenden und die Zuluftkammer (26) aufweisenden Zuluftkanal und der Zuflussquerschnitt durch einen vom Stellelement (23) unbedeckten Anteil von in der Kanalwand (28) im Bereich der Zuluftkammer (26) liegenden Zuluftöffnungen (29) gebildet sind,
- wobei die Abluftdrossel (22) durch einen den Gehäuseblock (24) durchsetzenden und die Abluftkammer (27) aufweisenden Abluftkanal und der Abflussquerschnitt durch einen vom Stellelement (23) unbedeckten Anteil von in der Kanalwand (28) im Bereich der Abluftkammer (27) liegenden Abluftöffnungen (30) gebildet sind.

6. Stromabnehmer (2) nach Anspruch 5,
- wobei der Zuluftkanal einen Zulufteintrittskanal (31), an welchem eingangsseitig die von der Druckluftversorgung (15) herführende Zuluftleitung (18) an den Gehäuseblock (24) angeschlossen ist und welcher ausgangsseitig durch wenigstens eine der Zuluftöffnungen (29) in die Zuluftkammer (26) mündet, sowie einen Zuluftaustrittskanal (32), in welchen eingangsseitig die Zuluftkammer (26) durch wenigstens eine der Zuluftöffnungen (29) mündet und an welchen ausgangsseitig die zum Hubantrieb (12) führende Zuluftleitung (18) an den Gehäuseblock (24) angeschlossen ist, aufweist, und
- wobei der Abluftkanal einen Ablufteintrittskanal (33), an welchem eingangsseitig die vom Hubantrieb (12) herführende Abluftleitung (16) an den Gehäuseblock (24) angeschlossen ist und welcher ausgangsseitig über wenigstens eine der Abluftöffnungen (30) in die Abluftkammer (27) mündet, sowie einen Abluftaustrittskanal (34), in welchen eingangsseitig die Abluftkammer (27) durch wenigstens eine der Abluftöffnungen (30) mündet und an welchen ausgangsseitig die in die Umgebung führende Abluftleitung (16) an den Gehäuseblock (24) angeschlossen ist, aufweist.

7. Stromabnehmer (2) nach einem der vorangehenden Ansprüche,
- wobei die Zuluftöffnungen (29) und/oder die Abluftöffnungen (30) derart in der Kanalwand (28) geformt und/oder verteilt sind, dass das Stellelement (23) in Abhängigkeit der jeweiligen Vertikalposition (h) der Wippenanordnungen (7) Abluft bzw. Zuluft durch den jeweils unbedeckten Anteil der Zuluftöffnungen (29) bzw. Abluftöffnungen (30) mit einen Volumenstrom durchlässt, welcher einer für diese Vertikalposition (h) vorgegebene Vertikalgeschwindigkeit der Wippenanordnungen (7) entspricht.

8. Straßenfahrzeug (1) mit einem elektrischen oder hybrid-elektrischen Antrieb und einem Stromabnehmer (2) nach einem der vorangehenden Ansprüchen.
